# EUROPÄISCHE PATENTSCHRIFT

(11) **EP 2 379 906 B1**
(45) Veröffentlichungstag und Bekanntmachung des Hinweises auf die Patenterteilung: **18.02.2015**
(21) Anmeldenummer: 09813827.4
(22) Anmeldetag: 30.12.2009
(51) Int. Cl.: F16D 1/10, F16B 35/04

(54) **PROFILE ZUR ÜBERTRAGUNG VON DREHMOMENTEN UND DREHMOMENTSCHLÜSSIGE VERBINDUNG**
PROFILES FOR TRANSMITTING TORQUE AND TORQUE-LOCKED CONNECTION
PROFIL DE TRANSMISSION DE COUPLES DE ROTATION ET LIAISON PAR COUPLE DE ROTATION

(30) Priorität: 15.01.2009 DE 202009000623 U
(43) Veröffentlichungstag der Anmeldung: 26.10.2011
(73) Patentinhaber: Altenloh, Brinck & Co. GmbH & Co. KG, 58256 Ennepetal (DE)
(72) Erfinder: SCHRAER, Thorsten, 85305 Jetzendorf (DE)
(74) Vertreter: Beck, Alexander
(86) Internationale Anmeldenummer: PCT/DE2009/050080
(87) Internationale Veröffentlichungsnummer: WO 2010/081459

(56) Entgegenhaltungen:
- WO-A2-2005/052386
- DE-U1- 20 012 108
- DE-U1- 20 209 505
- DE-U1-202007 013 473
- US-A- 4 006 993

## Beschreibung

### Technisches Gebiet

In der Technik tritt häufig das Problem auf, eine drehmomentschlüssige Verbindung zwischen Zapfen, Wellen, Schäften oder anderen länglichen Elementen wie Bolzen und Stangen und darauf aufgesteckten Naben, wie beispielsweise Zahnrädern, Ritzeln oder Scheiben herzustellen.

### Stand der Technik

Gewöhnlich weisen dann die entsprechenden Zapfen, Wellen, Bolzen, Stangen oder ähnlichen Elementen bei einer solchen Welle-Nabeverbindung eine Nut-Federausführung oder ein Rändel auf, um Drehmoment zu übertragen. Alternativ ist eine Ausführung der Welle oder des Schaftes als Mehrkant, vorzugsweise als Vierkant oder Sechskant mit einer entsprechenden Gegenkontur im Nabenteil gebräuchlich. Alle diese Lösungen gemäß dem Stand der Technik weisen den großen Nachteil auf, dass ein großer Durchmesserunterschied zwischen dem eigentlichen Schaft und der Kontur, die das Drehmoment überträgt, erforderlich ist. Beispielsweise hat ein gemäß dem Stand der Technik üblicher Vierkantschaft mit einer Schlüsselweite von 12 mm (dies entspricht dem inneren Hüllkreis) einen Durchmesser über die Ecken von etwa 17 mm. Letzteres entspricht dem äußeren Hüllkreis.

Dies führt zu einem unnötigen Platzverbrauch und erheblichem zusätzlichem Gewicht bei allen solchen Konstruktionen, die Drehmomente zwischen einem Schaft und einem aufgesteckten Nabenteil übertragen sollen.

Dieses Problem ist besonders nachteilig bei Welle-Nabe-Verbindungen, bei denen auf der Welle neben dem Außenprofil ein Außengewinde angeordnet werden muss, welches dazu dient, über eine auf dieses Außengewinde aufgeschraubte Mutter das Nabenteil axial zu sichern oder zu fixieren. Dies ist beispielsweise bei so genannten abgesetzten Exzenterschrauben zum Einstellen von Sturz und Spur an Kraftfahrzeugfahrwerken besonders nachteilig, da wegen des Durchmessemnterschiedes zwischen dem großen, profilierten Schaftdurchmesser oder Schaftansatz im Verhältnis zum Gewindeteil die Exzenterschraube besonders dick und damit schwerer und teurer ausgestaltet werden muss. Dies ist in der Kraftfahrzeugtechnik notwendig, weil das Profil Drehmomente von 100 Nm und mehr beim Einstellen der Fahrwerke übertragen können muss.

Bisher hielt man für diesen Zweck nur sehr ausgeprägte Profile für geeignet. Der gegenwärtige Stand der Technik weist hierzu Gestaltungen mit einem trapezförmigen Vierkantschaft auf, wie sie beispielsweise von der Firma ABC in deren Gebrauchsmuster DE 202 09 505 beschrieben werden. Diese Exzenterschrauben weisen einen Durchmesserunterschied von mindestens 4 mm zwischen dem äußeren Hüllkreis des Profils und dem Gewindedurchmesser auf. Schließlich muss das entsprechende Innenprofil des Nabenteils ja über das Außengewinde passen. Hierzu hat man zwar versucht, entsprechend der Profilierung unterbrochene Außengewinde vorzusehen. Dies hat sich jedoch nicht bewährt, da durch die entsprechenden Unterbrechungen der Außengewinde die mechanischen Eigenschaften, insbesondere beim Anziehen der Muttern erheblich verschlechtert worden sind. Die Gefahr des Abreißens beziehungsweise der Zerstörung entsprechend unterbrochener Außengewinde ist dabei nämlich erheblich.

Die DE 20 2007 013473 U1 zeigt ebenfalls Profile zur Übertragung von Drehmomenten zwischen einer Nabe und einem Zapfen oder einer Welle, wobei die Nabe durch eine auf ein an das Profil anschließendes ununterbrochenes Außengewinde aufgeschraubte Mutter gesichert ist. Das dort gezeigte Profil weist jedoch einen wesentlich größeren Durchmesser (Radialabstand von der Rotationsachse des Schaftes) als das an die Profilierung anschließende Außengewinde. Diese Entgegenhaltung zeigt daher einen Stand der Technik, ähnlich der vorgenannten DE 20 209 505.

Zur Lösung der erfindungsgemäßen Aufgabe war es aus der US 4 006 993 A außerdem bereits bekannt, Profile zur Übertragung von Drehmomenten zwischen einer Nabe und einem Schaft, einem Zapfen oder einer Welle vorzusehen, bei denen das Schaft-, Zapfen- oder Wellenseitige Profil aus Vertiefungen im Schaft, im Zapfen oder in der Welle gebildet wird, und das nabenseitige Profil aus entsprechenden kreissektorförmigen Ausstülpungen gebildet wird, die In ihrer Mitte kreissektorförmige Aussparungen aufweisen, sodass beim Ineinandergreifen der Profile ein Querschnitt offen bleibt, der dem Querschnitt einer Konvexlinse entspricht. Dieser Stand der Technik weist jedoch überhaupt kein Außengewinde auf, sodass sich das erfindungsgemäße Problem hier gar nicht stellt. Bei dieser Entgegenhaltung wird vielmehr ein Presssitz zwischen Schaftteil und Nabenteil hergestellt. Es handelt sich also um eine völlig andere technische Lösung. Weiter zeigt die DE 20 012 108 U1 ein Verbindungselement mit Profilen, die als kreissektorförmige Vertiefungen ausgebildet sind. Die dortige Profilierung ist aber direkt ins Außengewinde eingebracht. Es handelt sich dabei also um eine Alternativlösung aus dem Stand der Technik, die oben bereits im Abschnitt [005] dargestellt ist. Es ist unter anderem Aufgabe der vorliegenden Erfindung, die bei dieser Entgegenhaltung auftretenden Probleme durch die schlechten mechanischen Eigenschaften des unterbrochenen Außengewindes dadurch zu vermeiden, dass erstmals erfindungsgemäß ein nicht mehr unterbrochenes Außengewinde Verwendung findet, und die Profilierung zur Übertragung der Kräfte vom Schaft auf die Nabe erst hinter dem Außengewinde und nicht im Außengewinde angeordnet ist.

In soweit musste bisher der besonders bei Kraftfahrzeugfahrwerken für den Konstruktur sehr unangenehme zusätzliche Platzbedarf und das zusätzliche Gewicht des auf diese Weise erheblich überdimensionierten Exzenterschraubenschaftes hingenommen werden.

### Darstellung der Erfindung

Aufgabe der vorliegenden Erfindung ist es daher, eine für eine Übertragung großer Drehmomente geeignete Verbindung zwischen einer Welle und einem Nabenteil sowie ein dafür geeignetes Profil anzugeben, bei dem der Schaft nicht überdimensioniert werden muss, aber dennoch eine ausreichende Drehmomentübertragung und ein durchgehendes, also nicht unterbrochenes Außengewinde zur Verfügung steht.

Erfindungsgemäß wird diese Aufgabe durch Profile zur Übertragung von Drehmomenten zwischen einer Nabe und einem Zapfen oder einer Welle gelöst, wobei die Nabe durch eine auf ein an das Profil anschließendes, ununterbrochenes Außengewinde aufgeschraubte Mutter gesichert ist, und der Unterschied zwischen dem Außendurchmesser des Außengewindes und dem äußeren Hüllkreis des Profils höchstens 1 mm beträgt und der niedrigste Punkt des Profils am Schaft radial tiefer liegt, als der Gewindedurchmesser des Außengewindes nach dem Gewindewalzen beziehungsweise Rollen. Dies bedeutet, dass der niedrigste Punkt des Profils des Schaftes erfindungsgemäß genauso tief sein kann wie der Durchmesser des Außengewindes vor dem Walzen beziehungsweise Rollen. Das Gewindevorwalzmaß entspricht also näherungsweise dem Flankendurchmesser.

Vorzugsweise soll trotzdem das Nabenteil oder andere Bauteile mit dem Negativprofil des Schaftes über das Gewinde gebracht werden können.

Vorzugsweise wird diese Aufgabe dadurch gelöst, dass das schaft-, zapfen- oder wellenseitige Profil aus kreissektorförmigen Vertiefungen im Schaft, im Zapfen oder in der Welle gebildet wird, und das nabenseitige Profil, also das Negativprofil, aus entsprechenden kreissektorförmigen Ausstülpungen gebildet wird, die in ihrer Mitte kreissektorförmige Aussparungen aufweisen, sodass beim Ineinandergreifen der beiden Profile ein Querschnitt offen bleibt, der dem Querschnitt einer Konvexlinse entspricht.

Die vorliegende Erfindung beruht nämlich auf der Erkenntnis, dass bei solchen kreissektorförmig ausgestalteten Profilen die Drehmomentübertragung im Wesentlichen nur in den Randbereichen der Sektoren erfolgt. In dem nahezu tangential zur Drehmomentrichtung verlaufenden Innenbereich der kreissektorförmigen Profile wird kaum Drehmoment übertragen. Daher kann in diesem Bereich in dem nabenseitigen, also hervortretenden Profil wiederum eine kreissektorförmige Ausnehmung vorgesehen werden, durch die die Nabe über das Außengewinde passt, ohne dass die Fähigkeit des Profils zur Übertragung von Drehmomenten wesentlich verringert würde.

Erfindungsgemäß ist es also erstmals möglich, bei nur 1 mm Durchmesserunterschied zwischen Schaftdurchmesser und Gewindedurchmesser die Nabe oder Scheibe über das Gewinde zu stecken und trotzdem noch genügend Formschluss in den Rillen des Schaftes zu erzielen, um hohe Drehmomente zu übertragen. Mit der Anzahl der Rillen im Schaft lässt sich das zu übertragende Drehmoment noch erhöhen (mehr Rillen übertragen mehr Drehmoment).

Erfindungsgemäß ist es dazu auch nicht nötig, das Außengewinde zu unterbrechen. Vielmehr steht erfindungsgemäß ein volles Außengewinde mit voller Tragfähigkeit zur Verfügung.

Es ist dabei besonders bevorzugt, die kreissektorförmigen Aussparungen in dem nabenseitigen Profil im montierten Zustand der Nabe konzentrisch zu dem Außengewinde anzuordnen, und den Radius der Kreissektoren der Aussparungen so zu wählen, dass er geringfügig größer ist, als der Außenradius des Außengewindes.

Es ist dabei besonders bevorzugt, dass die Tiefe der auf dem Zapfen oder auf der Welle angebrachten Profile in Aufsteckrichtung der Nabe abnimmt. Auf diese Weise kann eine Selbstzentrierung des Nabenteiles auf dem Schaft beim Anziehen der auf das Außengewinde aufgeschraubten Mutter erzielt werden.

Ein weiterer Vorteil der vorliegenden Erfindung liegt darin, dass das Profil auf der Welle oder dem Zapfen ohne spanabhebende Fertigungsschritte ausschließlich durch Pressen, Walzen und/oder Rollen hergestellt werden kann. Auf diese Weise lässt sich das Profil der Welle oder des Zapfens beim Pressen des Schaftes herstellen, sodass die Vertiefungen ohne zusätzliche Arbeitsschritte hergestellt werden können. In diesem Fall wird das Gewinde dann in einem zweiten Schritt aufgewalzt oder gerollt. Das erfindungsgemäße Profil kann aber auch gewalzt werden, es lässt sich dann auch in einem Fertigungsschritt gleichzeitig mit dem Außengewinde anfertigen, ohne dass zusätzliche aufwendige spanabhebende Produktionsschritte erforderlich wären.

Hinsichtlich einer optimalen Drehmomentübertragung sollten auf der Welle, dem Schaft oder dem Zapfen mindestens drei, vorzugsweise fünf Vertiefungen angebracht sein.

Die erfindungsgemäße Aufgabe wird ebenfalls durch eine drehmomentschlüssige Verbindung zwischen einer Nabe oder Scheibe und einer Welle, einem Zapfen, oder einem Schaft gelöst, bei der die Nabe oder Scheibe mit einer profilierten Durchtrittsöffnung für die Welle, den Zapfen oder den Schaft versehen ist, und diese eine entsprechende Außenprofilierung aufweist, die aus kreissektorförmigen Vertiefungen in der Welle, dem Zapfen oder dem Schaft gebildet sind, die parallel zur Rotationsachse der Welle, des Zapfens oder des Schaftes verlaufen, wobei das Profil der Durchtrittsöffnung mit entsprechenden kreissektorförmigen Erhebungen ausgestaltet ist, die in ihrem Mittelbereich kreissektorförmige Aussparungen aufweisen, sodass beim Ineinandergreifen der Profilierungen ein Querschnitt offen bleibt, der dem Querschnitt einer Konvexlinse entspricht, wobei auf der Welle, dem Zapfen oder dem Schaft neben der Profilierung noch ein Außengewinde angebracht ist, welches üblicherweise dazu dient, die entsprechende Nabe oder Scheibe durch Aufschrauben einer Mutter auf dieses Außengewinde zu sichern, und die kreissektorförmigen Aussparungen in dem naben- oder scheibenseitigen Profil im montierten Zustand der Nabe oder Scheibe konzentrisch zu dem Außengewinde angeordnet sind, und einen Radius der Kreissektoren aufweisen, der geringfügig größer ist, als der Außenradius des Außengewindes.

Weiter ist es erfindungsgemäß besonders bevorzugt, dass die Tiefe der auf der Welle, dem Zapfen oder dem Schaft angebrachten Profile in Aufsteckrichtung der Nabe oder Scheibe abnimmt. Auf diese Weise kann beim Anziehen der Mutter eine Selbstzentrierung beziehungsweise Selbstausrichtung der Nabe oder Scheibe erzielt werden.

Ein weiterer besonderer Vorteil der vorliegenden Erfindung beruht darin, dass das Profil auf der Welle, dem Zapfen oder dem Schaft ohne spanabhebende Fertigungsschritte ausschließlich durch Pressen, Walzen und/oder Rollen hergestellt werden kann. Auf diese Weise werden die üblicherweise sehr aufwendigen spanabhebenden Fertigungsschritte eingespart, und die Herstellung des Profils kann gleichzeitig mit der Herstellung des Außengewindes in einem Arbeitsvorgang erfolgen.

Im Hinblick auf eine möglichst optimale Drehmomentenübertragung ist es erfindungsgemäß besonders bevorzugt, auf der Welle, dem Zapfen oder dem Schaft mindestens drei, vorzugsweise jedoch fünf, Vertiefungen anzubringen.

Die vorliegende Erfindung wird im Folgenden anhand des in den anliegenden Zeichnungen dargestellten Ausführungsbeispieles näher erläutert. Es zeigt:

### Kurze Beschreibung der Zeichnungen

Figur 1 eine Draufsicht auf einen Schaft und eine Scheibe mit dem erfindungsgemäßen Profil in Rotationsachsenrichtung gesehen;
Figur 2a die Darstellung der Scheibe in der Blickrichtung der Figur 1, wobei die Kreise der entsprechenden Radien zur besseren Verständlichkeit eingezeichnet sind;
Figur 2b das Detail X der Figur 2a;
Figur 3a eine Ansicht eines erfindungsgemäßen Schaftes für eine Exzenterschraube oder Exzenterstange in Teildarstellung von der Seite gesehen;
Figur 3b die Ansicht des Schaftes der Figur 3a von vorne (in Richtung auf den Kopf gesehen), wobei der Kopf nicht dargestellt ist; und
Figur 4 den Schnitt B-B durch den Schaft gemäß Figur 3a und 3b.

### Bester Weg zur Ausführung der Erfindung

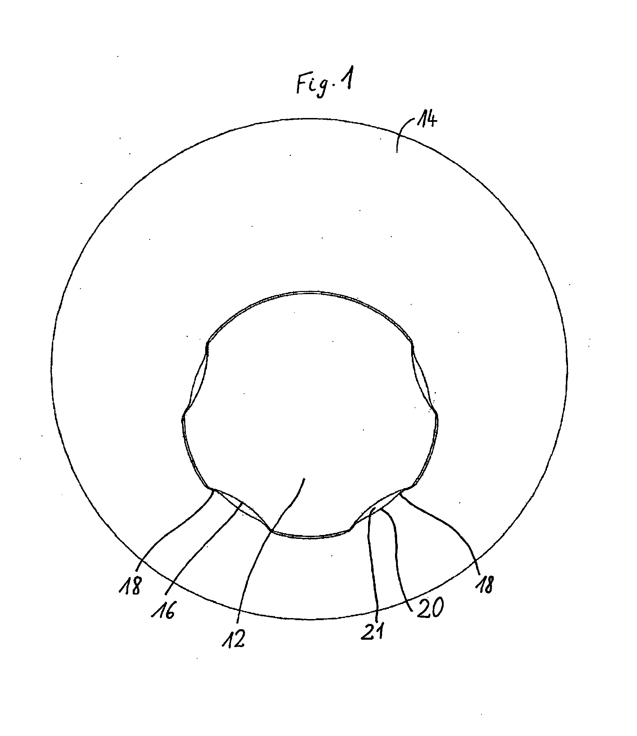

Figur 1 zeigt eine Draufsicht in Axialrichtung auf einen erfindungsgemäßen Schaft 12, auf den eine erfindungsgemäße Scheibe 14 bereits aufgesteckt ist. In dem dargestellten Fall handelt es sich um eine Anwendung für eine Exzenterschraube beziehungsweise Exzenterstange. Die Scheibe 14 ist daher exzentrisch und das Profil ist so gestaltet, dass ein Aufstecken der Scheibe 14 auf den Schaft 12 nur in einer einzigen Winkelstellung möglich ist.

Erfindungsgemäß besteht das Profil am Schaft 12 aus kreissektorförmigen Vertiefungen 16, wobei die maximale Tiefe (Abstand der Oberfläche der tiefsten Stelle der Vertiefung von dem Außenhüllkreis des Schaftes 12) etwa 1 mm beträgt und der Radius der Kreissektoren, die die Vertiefungen 16 beschreiben, kleiner ist als der Radius des Schaftes 12. In dem dargestellten Ausführungsbeispiel sind vier solche Vertiefungen 16 vorgesehen. Selbstverständlich können, insbesondere bei großen Schaftdurchmessern und großen zu übertragenden Drehmomenten auch wesentlich mehr über den Umfang des Schaftes 12 verteilte Vertiefungen vorgesehen sein.

Im vorliegenden Fall ist die oben liegende Vertiefung weg gelassen worden, um auf diese Weise eine eindeutige Winkelzuordnung der Exzenterscheibe zu erzwingen. Bei anderen Anwendungsfällen, beispielsweise bei der Anbringung eines Zahnrades oder eines Ritzels auf einer Welle kann natürlich auch eine weitere Vertiefung an dieser Stelle vorgesehen sein beziehungsweise können sämtliche Vertiefungen gleichmäßig über den Umfang des Schaftes 12 verteilt werden. Dann ist jedoch keine eindeutige Winkelzuordnung zwischen Schaft 12 und Scheibe 14 sichergestellt.

Bei sehr kleinen Schaftdurchmessern kann die Zahl der Vertiefungen gegenüber dem dargestellten Beispiel natürlich auch gegebenenfalls bis auf eine einzige reduziert werden.

Das entsprechende Gegenprofil an der Scheibe 14 besteht aus entsprechenden kreissektorförmigen Ausstülpungen 18.

Erfindungsgemäß weisen diese aber in ihrem mittleren Bereich wiederum kreissektorförmige Aussparungen 20 auf, die der Außenkontur des Außengewindes 26 entsprechen und gegebenenfalls etwas größer ausgeführt sind, damit die Scheibe 14 auch problemlos über das Außengewinde 26 geschoben werden kann. Die Aussparungen 20 weisen daher einen Radius auf, der geringfügig größer ist als der Außenradius des Außengewindes 26, und verlaufen konzentrisch zu der Rotationsachse des Schaftes 12.

Zwischen Schaft 12 und Scheibe 14 ist daher ein Querschnitt 21 offen, der den Durchtritt des Außengewindes 26 durch die Scheibe 14 erlaubt, und der die Form des Querschnittes einer Konvexlinse aufweist, das heißt der einer Öffnung entspricht, die von zwei sich schneidenden Kreisbögen unterschiedlichen Radiuses begrenzt wird.

Bisher ist man in soweit davon ausgegangen, dass ein maximaler Kraftschluss und damit Drehmomentenschluss dann erzielt wird, wenn die Profile des Schaftes und der Scheibe möglichst genau zueinander passen. Bei der vorliegenden Erfindung wurde erstmals erkannt, dass bei kreissektorförmigen Profilen der mittlere Bereich der Profile, das heißt, der Bereich der Profile, in dem die Grenzlinie zwischen den Profilen im Wesentlichen tangential zur Oberfläche des Schaftes 12 verläuft, kaum zur Kraftbeziehungsweise Drehmomentenübertragung beiträgt, und dass man daher den entsprechenden Bereich ausschneiden kann, sodass eine Durchtrittsmöglichkeit für das Außengewinde 26 durch die Scheibe 14 geschaffen werden kann. Die vorliegende Erfindung beruht dabei auf der Erkenntnis, dass trotzdem eine sehr gute Drehmomentenübertragung zwischen Schaft 12 und Scheibe 14 gewährleistet ist, obwohl sich das Profil des Schaftes 12 und das Profil der Scheibe 14 lediglich in relativ geringen Bereichen übergreifen.

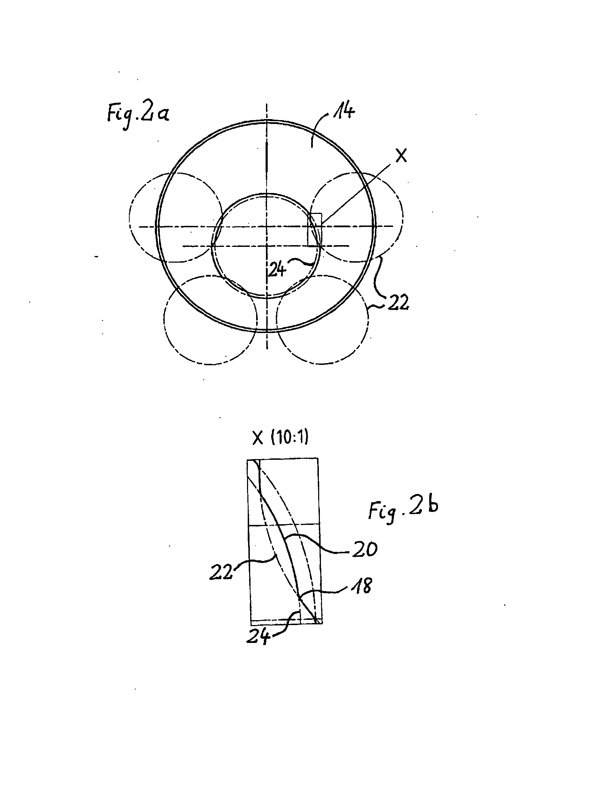

Figur 2a zeigt die für das in Figur 1 dargestellte Profil erforderlichen geometrischen Konstruktionen zur weiteren, besseren Veranschaulichung des Profils in Figur 1. Wie in Fig. 2a dargestellt, werden die Ausnehmungen 16 in dem Schaft 12 durch Kreissektoren von Kreisen 22 gebildet, die einen etwas geringeren Durchmesser haben, als der Schaft 12. Die Aussparung 20 in der konvexen Ausstülpung 18 der Scheibe 14 wird von einem Kreis 24 begrenzt, der dem Hüllkreis des Außengewindes 26 an dem Schaft 12 entspricht oder einem etwas größeren Durchmesser als dieser Hüllkreis besitzt und zu diesem Hüllkreis konzentrisch ist.

Figur 2b zeigt das Detail X der Figur 2a, damit die geometrische Konstruktion der Aussparung 20 in der Ausstülpung 18 mittels der Kreise 22 und 24 klarer erkennbar wird.

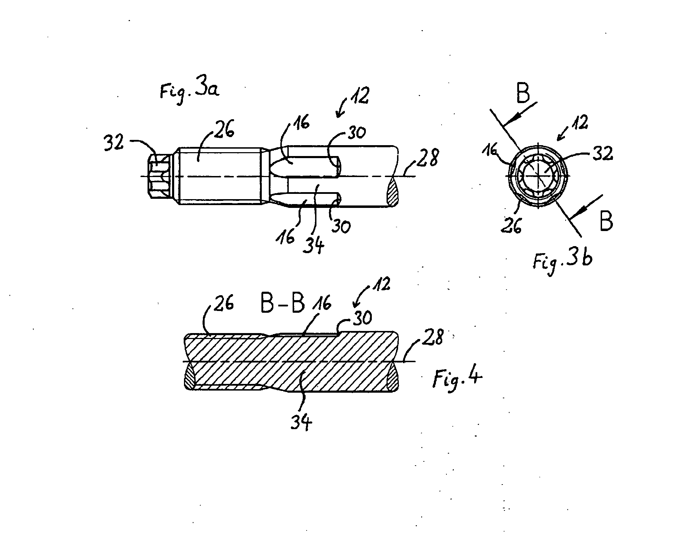

Figur 3a zeigt das Ende eines erfindungsgemäßen Schaftes 12, welches an seinem freien Ende ein Außengewinde 26 trägt. Dieses Außengewinde dient dem Aufschrauben einer Mutter, nachdem eine entsprechende Scheibe oder ein entsprechendes Zahnrad oder Ritzel auf den Schaft 12 aufgeschoben worden ist. Von der Seite gut erkennbar ist der Verlauf der kreissektorförmigen Profile 16 parallel zu der Rotationsachse 28 des Schaftes 12.

Bei dieser Ausführungsform ist das Ende des Schaftes 12 mit einem Kraftangriff 32 versehen. An diesen schließt sich das Außengewinde 26 an. Nach dem Außengewinde 26 folgt dann ein profilierter Bereich 34, der die kreissektorförmigen Profile 16 umfasst.

In Richtung von dem Außengewinde 26 weg laufen diese Profilausnehmungen 16 schräg, vorzugsweise unter einem Winkel von 45° auf die Oberfläche des Schaftes 12 hin aus. Es entstehen dadurch Bereiche 30, in denen die Profilausnehmungen 16 mit abnehmender Tiefe in die normale Mantelfläche des Schaftes 12 übergehen. Durch diese Gestaltung kann vorzugsweise erreicht werden, dass sich eine entsprechende Scheibe 14, ein Zahnrad oder Ritzel auf dem Schaft 12 selbst zentriert, wenn eine auf das Außengewinde 26 aufgeschraubte Mutter festgezogen wird. Dies ist in Figur 4 noch detaillierter dargestellt.

Figur 3b zeigt den in Figur 3 dargestellten Abschnitt des Schaftes 12 vom Kraftangriff 32 aus gesehen. Von Innen nach Außen erkennt man den Kraftangriff 32, das Außengewinde 26 und dahinter den profilierten Schaftbereich 34 mit den Vertiefungen 16. Zur besseren Verständlichkeit der Darstellung ist der Hüllkreis 26 hier so gezeichnet, dass der gesamte dahinter befindliche Verlauf der Vertiefungen 16 durchgezogen dargestellt ist. Es ist zu beachten, dass in Natura die inneren Bereiche der Vertiefungen 16 durch den äußeren Hüllkreis des Außengewindes 26 verdeckt werden und daher nach den Regeln des technischen Zeichnens nicht dargestellt werden sollten.

In der vorliegenden Form sollte die Figur 3b aber besser geeignet sein, um die Funktion der vorliegenden Erfindung und insbesondere die Formgebung für die Ausstanzung in der Scheibe 14 zu verstehen. Insbesondere wird an der Figur 3b erkennbar, dass die Profilierungen 16 auf dem Schaft 12 tatsächlich tiefer sind als der äußere Hüllkreis des Außengewindes 26.

Figur 4 ist der Schnitt B-B der Figur 3b, daher ist lediglich eine der Vertiefungen 16 des Profils dargestellt, wobei der Übergang 30 dieses Profils 16 in die normale Mantelfläche des Schaftes 12 erkennbar ist. Im vorliegenden Fall erfolgt dieser Übergang mit einem Winkel von 45°, es können jedoch auch geringere oder steilere Winkel für diesen Übergang gewählt werden. Auf diese Weise ist die Selbstzentrierung und Selbstausrichtung eines auf diesen Schaft aufgesetzten Nabenteils beim Festziehen einer auf das Außengewinde 26 aufgeschraubten Mutter sichergestellt.

Die vorliegende Erfindung weist folgende Vorteile auf:
Es ist möglich, bei einem Durchmesserunterschied zwischen Schaft und Gewinde von nur 1 mm dennoch beträchtliche Drehmomente zu übertragen ohne auf ein durchgehendes Außengewinde verzichten zu müssen. Durch die spezielle erfindungsgemäße Geometrie des Profils am Nabenteil (Aussparungen 20) ist es möglich, ein durchgehendes Außengewinde 26 vorzusehen, und dennoch ein Nabenteil 14 über dieses Außengewinde zu schieben, obwohl das Profil 16 des Schaftes 12 tiefer ist, als der Außendurchmesser des Außengewindes 26.

Die erfindungsgemäße Gestaltung des Schaftes 12 hat darüber hinaus den Vorteil, dass der Schaft 12 vollständig presstechnisch und walz- beziehungsweise rolltechnisch hergestellt werden kann, ohne dass irgendeine spandende Nacharbeit wie Schleifen oder Fräsen notwendig wäre.

Erstaunlicherweise weist das erfindungsgemäße Profil sogar eine bessere Drehmomentenübertragung als ein gleichgroßes Sechskantprofil aus dem Stand der Technik auf.

## Patentansprüche

1. Schaft, Zapfen oder Welle mit einem Profil (16, 18, 20) zur Übertragung von Drehmomenten zwischen einer Nabe (14) oder einem anderen Bauteil und dem Schaft, dem Zapfen oder der Welle (12), die mit dem Profil (16, 18, 20) und einem an diesem anschließenden, ununterbrochenen Außengewinde (26) versehen sind, wobei die Nabe (14) durch eine auf das Außengewinde (26) aufgeschraubte Mutter gesichert ist, **dadurch gekennzeichnet, dass** der Unterschied zwischen dem Außendurchmesser des Außengewindes (26) und dem äußeren Hüllkreis des Profils (16, 18, 20) höchstens 1 mm beträgt, und der niedrigste Punkt des Profils (16) am Schaft, am Zapfen oder an der Welle (12) radial tiefer liegt, als der Gewindedurchmesser des Außengewindes (26) nach dem Gewindewalzen oder Rollen und die Nabe (14) oder andere Bauteile mit dem Negativprofil des Schaftes, des Zapfens oder der Welle trotzdem über das Außengewinde (26) gebracht werden können.

2. Schaft, Zapfen oder Welle mit einem Profil (16, 18, 20) nach Anspruch **1,dadurch gekennzei chnet, dass** das schaft-, zapfen- oder wellenseitige Profil aus kreissektorförmigen Vertiefungen (16) im Schaft, im Zapfen oder in der Welle (12) gebildet wird, und das nabenseitige Profil aus entsprechenden kreissektorförmigen Ausstülpungen (18) gebildet wird, die in ihrer Mitte kreissektorförmige Aussparungen (20) aufweisen, sodass beim Ineinandergreifen der Profile (16, 18, 20) ein Querschnitt (20) offen bleibt, der dem Querschnitt einer Konvexlinse entspricht und der niedrigste Punkt des Profils (16) des Schaftes, des Zapfens oder der Welle (12) genauso tief ist, wie der Durchmesser des Außengewindes (26) im Rohzustand, also vor dem Gewindewalzen oder -rollen war.

3. Schaft, Zapfen oder Welle mit einem Profil (16, 18, 20) nach Anspruch 2, wobei auf dem Zapfen oder der Welle (12) neben dem Profil (16, 18, 20) ein Außengewinde (26) angeordnet ist, welches dazu dient, die entsprechende Nabe (14) durch Aufschrauben einer Mutter zu sichern, **dadurch gekennzeichnet, dass** die kreissektorförmigen Aussparungen (20) in dem nabenseitigen Profil (18) im montierten Zustand der Nabe konzentrisch zu dem Außengewinde (26) angeordnet sind, und einen Radius der Kreissektorform aufweisen, der geringfügig größer ist, als der Außenradius des Außengewindes (26).

4. Schaft, Zapfen oder Welle mit einem Profil (16, 18, 20) nach Anspruch 2 oder 3, **dadurch gekennzeichnet, dass** die Tiefe der auf dem Zapfen oder auf der Welle (12) angebrachten Profile (16) in Aufsteckrichtung der Nabe (14) abnimmt.

5. Schaft, Zapfen oder Welle mit einem Profil (16, 18, 20) nach Anspruch 1, 2, 3 oder 4, **dadurch gekennzeichnet, dass** das Profil (16) auf der Welle (12) dem Schaft oder dem Zapfen ohne spanabhebende Fertigungsschritte ausschließlich durch Pressen, Walzen und/oder Rollen hergestellt ist.

6. Schaft, Zapfen oder Welle mit einem Profil (16, 18, 20) nach Anspruch 1, 2, 3, 4 oder 5, **dadurch gekennzeichnet, dass** auf der Welle (12) oder dem Zapfen mindestens 3, vorzugsweise 5 Vertiefungen (16) angebracht sind.

7. Drehmomentschlüssige Verbindung zwischen einer Nabe oder Scheibe (14) und einer Welle, einem Zapfen oder einem Schaft (12), bei der die Nabe oder Scheibe (14) mit einer profilierten Durchtrittsöffnung für die Welle, den Zapfen oder den Schaft (12) und diese mit einer entsprechenden Außenprofilierung (16) und einem an diese Außenprofilierung (16) anschließenden ununterbrochenen Außengewinde (26) versehen sind, welches zum Aufschrauben einer Mutter zur Sicherung der Nabe oder Scheibe (14) dient, **dadurch gekennzeichnet, dass** der Unterschied zwischen dem Außendurchmesser des Außengewindes (26) und dem äußeren Hüllkreis des Profils (16, 18, 20) höchstens 1 mm beträgt, und der niedrigste Punkt der Außenprofilierung (16) radial tiefer liegt, als der Gewindedurchmesser des Außengewindes (26) nach dem Gewindewalzen oder Rollen und die Nabe (14) oder Scheibe trotzdem über das Außengewinde (26) gebracht werden können.

8. Drehmomentschlüssige Verbindung nach Anspruch 7 **dadurch gekennzeichnet, dass** die Außenprofilierung (16) der Welle, des Zapfens oder des Schaftes (12) aus parallel zur Rotationsachse verlaufenden kreissektorförmigen Vertiefungen (16) in der Welle, dem Zapfen oder dem Schaft (12) gebildet wird und das Profil der Durchtrittsöffnung mit entsprechenden kreissektorförmigen Erhebungen (18) ausgestaltet ist, die in ihrem Mittelbereich kreissektorförmige Aussparungen (20) aufweisen, sodass beim Ineinandergreifen der Profilierungen (16, 18, 20) ein Querschnitt (20) offen bleibt, der dem Querschnitt einer Konvexlinse entspricht, und der niedrigste Punkt der Außenprofilierung (16) genauso tief ist, wie der Durchmesser des Außengewindes (26) im Rohzustand, also vor dem Gewindewalzen oder Rollen war.

9. Drehmomentschlüssige Verbindung nach Anspruch 8, bei der auf der Welle, dem Zapfen oder dem Schaft (12) neben der Profilierung (16) noch ein Außengewinde (26) angebracht ist, welches dazu dient, die entsprechende Nabe oder Scheibe (14) durch Aufschrauben einer Mutter auf dieses Außengewinde (26) zu sichern, **dadurch gekennzeichnet, dass** die kreissektorförmigen Ansparungen (20) in dem naben- oder scheibenseitigen Profil (14) im montierten Zustand der Nabe oder Scheibe (14) konzentrisch zu dem Außengewinde (26) angeordnet sind, und einen Radius der Kreissektoren aufweisen, der geringfügig größer ist, als der Außenradius des Außengewindes (26).

10. Drehmomentschlüssige Verbindung nach Anspruch 8 oder 9, **dadurch gekennzeichnet, dass** die Tiefe der auf der Welle, dem Zapfen oder dem Schaft (12) angebrachten Profile (16) in Aufsteckrichtung der Nabe oder Scheibe (14) abnimmt.

11. Drehmomentschlüssige Verbindung nach Anspruch 8, 9 oder 10, **dadurch gekennzeichnet, dass** das Profil (16) auf der Welle, dem Zapfen oder dem Schaft (12) ohne spanabhebende Fertigungsschnitte ausschließlich durch Pressen, Walzen und/oder Rollen hergestellt ist.

12. Drehmomentschlüssige Verbindung nach Anspruch 8, 9, 10 oder 11, **dadurch gekennzeichnet, dass** auf der Welle, dem Zapfen oder dem Schaft (12) mindestens 3, vorzugsweise 5 Vertiefungen angebracht sind.

## Claims

1. Shank, journal or shaft with a profile member (16, 18, 20) for transferring torques between a hub (14) or another part and the shank, the journal or the shaft (12), which is provided with the profile (16, 18, 20) and an uninterrupted external thread (26) adjacent to the profile, wherein the hub (14) is secured by a nut screwed upon the external thread (26), **characterized in that** the difference between the outer diameter of the external thread (26) and the outer envelope circle of the profile (16, 18, 20) is not exceeding 1 mm and the lowest point of the profile (16) at the shank, journal or shaft (12) is radially deeper than the thread diameter of the external thread (26) after the rolling of the thread, and the hub (14) or other parts with the negative profile of the shaft, the journal or the shank can be passed over the external thread (26) in spite of this.

2. Shank, journal or shaft with a profile member (16, 18, 20) according to claim 1, **characterized in that** the profile at the side of the shank, journal or shaft is formed by recesses (16) formed like a circular sector, and the profile on the side of the hub is formed by corresponding protruberances in the form of a circular sector (20), so that with the inter-engagement of the profiled members (16, 18, 20) a cross-section (20) corresponding to the cross-section of a convex lens remains open and the lowest point of the profile (16) of the shank, journal or shaft (12) is as deep as the diameter of the external thread (26) in pre-fabricated situation, this means before the milling or rolling of the thread.

3. Shank, journal or shaft with a profile member (16, 18, 20) according to claim 2, wherein on the journal or shaft (12) adjacent to the profile (16, 18, 20) an external thread (26) is arranged, which serves to secure the corresponding hub (14) by screwing a nut thereon, **characterized in that** the recesses (20) in the form of circular sectors in the profile (18) on the hub side are arranged concentrically to the external thread (26) in the mounted position, and have a radius of the form of the circular sectors, which is slightly larger than the outer radius of the external thread (26).

4. Shank, journal or shaft with a profile member (16, 18, 20) according to claims 2 or 3, **characterized in that** the depth of the profiled members (16) formed on the journal or the shaft (12) decreases in the direction of mounting of the hub (14).

5. Shank, journal or shaft with a profile member (16, 18, 20) according to claims 1, 2, 3 or 4, **characterized in that** the profiled member (16) on the shaft (12), the shank or the journal is produced without cutting production steps exclusively by pressing, rolling and/or milling.

6. Shank, journal or shaft with a profile member (16, 18, 20) according to claim 1, 2, 3, 4 or 5, **characterized in that** at least three, preferably five recesses (16) are formed in the shaft (12) or the journal.

7. Torque-locked connection between a hub or disc (14) and a shaft, a journal or a shank (12), the hub or disc (14) being provided with a profiled opening for the shaft, journal or shank (12) and these comprising a corresponding outer profiling (16) and an external thread (26) adjacent to said outer profiling (16), said external thread being provided for the screwing-on of a nut in order to secure the hub or disc (14), **characterized in that** the difference between the outer diameter of the external thread (26) and the outer envelope circle of the profile (16, 18, 20) is not exceeding 1 mm, and the lowest point of the outer profiling (16) is radially lower than the thread diameter of the external thread (26) after the milling or rolling of the thread, and the hub (14) or disc can be passed over the external thread (26) in spite of this.

8. Torque-locked connection according to claim 7, **characterized in that** the outer profiling (16) of the shaft, journal or shank (12) is formed of recesses (16), which extend parallel to the axis of rotation in the shaft, journal or shank (12) and the profile of the opening is formed with corresponding projections (18) having the shape of a circle sector and comprising in their center region reliefs (20) having the shape of a circle sector, in such a way that with the inter-engagement of the profilings (16, 18,20) a cross-section (20) corresponding to the cross-section of a convex lens remains open.

9. Torque-locked connection according to claim 8, wherein an external thread (26) is arranged on the shaft, journal or shank (12) adjacent to the profiling (16), which external thread secures the corresponding hub or disc (14) by screwing a nut onto said external thread (26), **characterized in that** the reliefs (20) having the shape of a circle sector in the profile (14) on the side of the hub or disc (14) are arranged concentrically with the external thread (26) in the assembled state of said hub or disc (14) and have a radius of the circle sectors which is slightly larger than the outer radius of the external thread (26).

10. Torque-locked connection according to claim 8 or 9, **characterized in that** the depth of the profiled members (16) formed on the shaft, journal or shank (12) decreases in the direction of mounting of the hub or disc (14).

11. Torque-locked connection according to claims 8, 9 or 10, **characterized in that** the profiled member (16) on the shaft, journal or shank (12) is produced without cutting production steps exclusively by pressing, rolling and/or milling.

12. Torque-locked connection according to claim 8, 9, 10, or 11, **characterized in that** at least three, preferably five recesses are formed in the journal or shaft (12).

## Revendications

1. Tige, tourillon ou arbre pourvu(e) d'un profil (16, 18, 20) pour la transmission de couples de rotation entre un moyeu ou une autre pièce (14) et la tige, le tourillon ou l'arbre (12), qui sont pourvus du profil (16, 18, 20) et d'un filet externe ininterrompu (26) se raccordant à celui-ci, dans lequel ou laquelle le moyeu (14) est fixé par un écrou vissé sur le filet externe (26), caractérisé(e) en ce que la différence entre le diamètre externe du filet externe (26) et le cercle enveloppant externe du profil (16, 18, 20) atteint au maximum 1 mm et le point le plus bas du profil (16) sur la tige, le tourillon ou l'arbre (12) se situe radialement plus profondément que le diamètre du filet externe (26) après laminage ou roulage des filets et le moyeu (14) ou d'autres pièces à profil négatif de la tige, du tourillon ou de l'arbre peut ou peuvent malgré tout être appliqués sur le filet externe (26).

2. Tige, tourillon ou arbre pourvu(e) d'un profil (16, 18, 20) selon la revendication 1, caractérisé(e) en ce que le profil côté tige, tourillon ou arbre est formé de cavités (16) en forme de secteurs de cercle dans la tige, le tourillon ou l'arbre, et le profil côté moyeu est formé de protubérances correspondantes (18) en forme de secteurs de cercle, qui présentent, au centre, des évidements en forme de secteurs de cercle, de sorte que, lors de l'engagement des profils (16, 18, 20), une section transversale reste ouverte, qui corresponde à la section transversale d'une lentille convexe et que le point le plus bas du profil (16) de la tige, du tourillon ou de l'arbre (12) soit tout aussi profond que le diamètre du filet externe (26) l'était à l'état brut, donc avant laminage ou roulage des filets.

3. Tige, tourillon ou arbre pourvu(e) d'un profil (16, 18, 20) selon la revendication 2, dans lequel ou laquelle il y a sur le tourillon ou l'arbre (12) à côté du profil (16, 18, 20) un filet externe (26) qui sert à bloquer le moyeu correspondant (14) par vissage d'un écrou, caractérisé(e) en ce que les évidements (20) en forme de secteurs de cercle sont ménagés dans le profil côté moyeu (18) à l'état monté du moyeu concentriquement au filet externe (26) et présentent un rayon de la forme de secteur de cercle qui est à peine plus grand que le rayon externe du filet externe (26).

4. Tige, tourillon ou arbre pourvu(e) d'un profil (16, 18, 20) selon la revendication 2 ou la revendication 3, caractérisé(e) en ce que la profondeur des profils (16) appliqués sur le tourillon ou l'arbre (12) se réduit dans le sens d'enfichage du moyeu (14).

5. Tige, tourillon ou arbre pourvu(e) d'un profil (16, 18, 20) selon les revendications 1, 2, 3 ou 4, caractérisé(e) en ce que le profil (16) sur l'arbre (12), la tige ou le tourillon est fabriqué sans enlèvement de copeaux exclusivement par emboutissage, laminage et/ou roulage.

6. Tige, tourillon ou arbre pourvu(e) d'un profil (16, 18, 20) selon les revendications 1, 2, 3, 4 ou 5, caractérisé(e) en ce qu'au moins 3, de préférence 5 cavités (16) sont ménagées sur l'arbre (12) ou le tourillon.

7. Liaison par couple de rotation entre un moyeu ou un disque (14) et un arbre, un tourillon ou une tige (12), dans laquelle le moyeu ou le disque (14) est pourvu d'un ouverture de passage profilée pour l'arbre, le tourillon ou la tige (12) et ceux-ci sont pourvus d'un profilage externe correspondant (16) et d'un filet externe ininterrompu (26) se raccordant à ce profilage externe (16), lequel filet externe sert au vissage d'un écrou pour bloquer le moyeu ou le disque (14), **caractérisée en ce que** la différence entre le diamètre externe du filet externe (26) et le cercle enveloppant externe du profil (16, 18, 20) atteint au maximum 1 mm et le point le plus bas du profilage externe (16) se situe radialement plus profondément que le diamètre du filet externe (26) après laminage ou roulage des filets et le moyeu (14) ou le disque peut malgré tout être appliqué sur le filet externe (26).

8. Liaison par couple de rotation selon la revendication 7, **caractérisée en ce que** le profilage externe (16) de l'arbre, du tourillon ou de la tige est formé de cavités (16) en forme de secteurs de cercle s'étendant parallèlement à l'axe de rotation dans l'arbre, le tourillon ou la tige (12), et le profil de l'ouverture de passage est conçu avec des protubérances correspondantes (18) en forme de secteurs de cercle, qui présentent, au centre, des évidements en forme de secteurs de cercle, de sorte que, lors de l'engagement des profilages (16, 18, 20), une section transversale (20) reste ouverte, qui corresponde à la section transversale d'une lentille convexe et que le point le plus bas du profilage externe (16) soit tout aussi profond que le diamètre du filet externe (26) l'était à l'état brut, donc avant le laminage ou le roulage des filets.

9. Liaison par couple de rotation selon la revendication 8, dans laquelle il y a sur l'arbre, le tourillon ou la tige (12) à côté du profilage (16, 18, 20) encore un filet externe (26) qui sert à bloquer le moyeu ou le disque correspondant (14) par vissage d'un écrou sur ce filet externe (26), **caractérisée en ce que** les évidements (20) en forme de secteurs de cercle sont ménagés dans le profil côté moyeu ou disque (14) à l'état monté du moyeu ou du disque concentriquement au filet externe (26) et présentent un rayon des secteurs de cercle qui est à peine plus grand que le rayon externe du filet externe (26).

10. Liaison par couple de rotation selon la revendication 8 ou la revendication 9, **caractérisée en ce que** la profondeur des profils (16) appliqués sur l'arbre, le tourillon ou la tige (12) se réduit dans le sens d'enfichage du moyeu ou du disque (14).

11. Liaison par couple de rotation selon les revendications 8, 9 ou 10, **caractérisée en ce que** le profil (16) sur l'arbre, le tourillon ou la tige (12) est fabriqué sans enlèvement de copeaux exclusivement par emboutissage, laminage et/ou roulage.

12. Liaison par couple de rotation selon les revendications 8, 9, 10 ou 11, **caractérisée en ce qu'**au moins 3, de préférence 5 cavités (16) sont ménagées sur l'arbre, le tourillon ou la tige (12).
